# EUROPEAN PATENT APPLICATION

(11) **EP 4 773 261 A1**
(43) Date of publication of application: **08.07.2026**
(21) Application number: 24859303.0
(22) Date of filing: 31.07.2024
(51) Int. Cl.: H01M 8/0226, H01M 8/0213, H01M 8/0221, H01M 8/10

(54) **PRECURSOR SHEET FOR FUEL CELL SEPARATOR**

(30) Priority: 30.08.2023 JP 2023140028
(71) Applicant: Nisshinbo Chemical Inc., Tokyo 103-8650 (JP)
(72) Inventor: ARAKI Tomoyuki, Chiba-city, Chiba 267-0056 (JP); OKEI Takehiro, Chiba-city, Chiba 267-0056 (JP)
(74) Representative: Mewburn Ellis LLP
(86) International application number: PCT/JP2024/027278
(87) International publication number: WO 2025/047261

(57) **Abstract**

This precursor sheet for a fuel cell separator contains graphite particles, a particulate or fibrous water-insoluble resin, and a water-soluble resin. The precursor sheet can be reverted to a slurry in an aqueous solvent, and thus it is possible to reuse defective articles and waste material generated during processing.

## Description

### TECHNICAL FIELD

The present invention relates to a precursor sheet for a fuel cell separator. More particularly, it relates to a fuel cell separator precursor sheet which can be re-slurrified and reused.

### BACKGROUND ART

One role of the fuel cell separator is to confer each unit cell with electrical conductivity. In addition, fuel cell separators provide flow channels for the supply of fuel and air (oxygen) to the unit cells and also serve as boundary walls separating the unit cells.

In general, the properties required of a fuel cell separator include gas (hydrogen and oxygen) impermeability, electrical conductivity, mechanical strength, durability (heat resistance, water resistance, acid resistance), thinness and lightness of weight, and shapeability.

Hitherto known methods for producing such fuel cell separators include methods that involve hot compression molding a sheet-like separator precursor.

For example, Patent Document 1 discloses a fuel cell separator which is obtained by compression molding a fuel cell separator precursor sheet which has a conductive substrate sheet, a dense layer containing a first type of graphite particle of given bulkiness and volume resistivity (conductivity) and a conductive layer containing a second type of graphite particle of given bulkiness and volume resistivity, and in which the dense layer and the conductive layer include a resin.

Patent Document 2 discloses a fuel cell separator obtained by using a molding machine equipped with a pair of dies in which a fuel cell separator shape has been engraved to thermoform a stampable sheet containing a conductive filler and a polymeric material.

Thus, there are many techniques for producing separators using a sheet-like precursor, yet no means for easily reusing a sheet-like precursor by way of an aqueous solvent (slurrification) has hitherto been known.

For example, Patent Document 1 teaches that the conductive layer can be created using a conductive layer-forming composition which includes a water-soluble resin as the binder, graphite and a resin. However, because a solution of a water-insoluble resin dissolved in a solvent is impregnated therein, the graphite becomes coated all around with the water-insoluble resin solution and fuses, making re-dissolution with an aqueous solvent and reuse by re-slurrification difficult.

Patent Document 2 uses a stampable sheet produced by a papermaking method from a suspension that includes a conductive filler and a polymeric material. However, during sheet formation, the material is pressed and thereby consolidated after high-temperature drying, as a result of which the polymer particles mutually bond and the polymeric material and conductive filler fuse together, making re-dissolution with an aqueous solvent and reuse by re-slurrification difficult.

Moreover, neither of these documents makes any mention of the reuse of a sheet-like precursor.

Patent Document 3 discloses a coating composition which contains a carbon material, a water-soluble resin binder, a water-dispersible microparticulate resin binder and an aqueous liquid-like medium, and which is used on coated current-collecting plates for fuel cells. Patent Document 4 discloses a coating composition which contains a carbon material, a water-soluble resin bonder, a water-dispersible microparticulate resin binder and an aqueous liquid-like medium, and which is used in coated separators for fuel cells.

However, the compositions in Patent Documents 3 and 4 are coating compositions for coating the surface of a current-collecting plate or separator; they are not precursor sheets for fuel cell separators. Furthermore, not only are these coating compositions not formed into sheets and used as separator precursors, because they form water-resistant films following coating and drying, they cannot be re-dissolved in an aqueous solvent or re-slurrified and reused.

### PRIOR ART DOCUMENTS

### PATENT DOCUMENTS

Patent Document 1: JP 7056796
Patent Document 2: JP-A 2006-269313
Patent Document 3: JP-A 2016-183325
Patent Document 4: JP-A 2016-81717

### SUMMARY OF INVENTION

### TECHNICAL PROBLEM

The present invention was arrived at in light of the above circumstances. An object of the invention is to provide a fuel cell precursor sheet which can be re-slurrified in an aqueous solvent, enabling defective product obtained during production and trimming waste generated during processing to be reused.

### SOLUTION TO PROBLEM

The inventors have conducted intensive investigations aimed at achieving the above objects. As a result, they have discovered that a fuel cell separator precursor sheet which contains graphite particles, a granular or fibrous water-insoluble resin and a water-soluble resin can be re-slurrified in an aqueous solvent, enabling defective product obtained during production and trimming waste generated during processing to be easily reused. This discovery ultimately led to the present invention.

Accordingly, this invention provides:
1. A precursor sheet for a fuel cell separator, which precursor sheet contains graphite particles, a granular or fibrous water-insoluble resin and a water-soluble resin;
2. The fuel cell separator precursor sheet of 1 above, wherein the precursor sheet has a structure in which the graphite particles and the granular or fibrous water-insoluble resin are fixed by the water-soluble resin;
3. The fuel cell separator precursor sheet of 1 above, wherein the content of the water-soluble resin is from 0.1 to 30.0 parts by weight per 100 parts by weight of the graphite particles and the content of the granular or fibrous water-insoluble resin is from 10.0 to 70.0 parts by weight per 100 parts by weight of the graphite particles;
4. The fuel cell separator precursor sheet of 1 above, further including carbon fibers; and
5. A fuel cell separator obtained by molding the fuel cell separator precursor sheet of any of 1 to 4 above.

### ADVANTAGEOUS EFFECTS OF INVENTION

The fuel cell separator precursor sheet of the invention can be re-slurrified with an aqueous solvent, enabling defective product obtained during production and trimming waste generated during processing to be re-slurrified and reprocessed again into sheet form, thus making it possible to reduce manufacturing loss.

In addition, fuel cell separators obtained using the fuel cell separator precursor sheet of the invention have excellent electrical conductivity and gas impermeability.

### DESCRIPTION OF EMBODIMENTS

The invention is described in detail below.

The fuel cell separator precursor sheet according to the invention (abbreviated below as "precursor sheet") is characterized by containing graphite particles, a granular or fibrous water-insoluble resin and a water-soluble resin.

### [1] Graphite Particles

The graphite particles making up the precursor sheet of the invention are not particularly limited; either natural graphite or synthetic graphite may be used.

Synthetic graphite particles suitably selected from those hitherto used in fuel cell separators may be used. Specific examples include synthetic graphite obtained by firing needle coke and synthetic graphite obtained by firing lump coke.

Natural graphite particles suitably selected from those hitherto used in fuel cell separators may be used. Specific examples include natural lump graphite and natural flake graphite.

These graphite particles may be of one type used alone or two or more types may be used in combination.

The shape of the graphite particles is not particularly limited, although a spherical or flaky shape is preferred from the standpoint of the electrical conductivity.

The mean particle diameter of the graphite particles is not particularly limited. However, to increase the electrical conductivity, the mean particle diameter is preferably from 5 to 200 µm, more preferably from 10 to 200 µm, even more preferably from 10 to 100 µm, and still more preferably from 10 to 50 µm. In this invention, the mean particle diameter refers to the median diameter (d₅₀) in particle size distribution measurement by the laser diffraction method (the same applies below).

### [2] Granular or Fibrous Water-Insoluble Resin

The granular or fibrous water-insoluble resin is not particularly limited, so long as it is a resin which is granular or fibrous and does not dissolve in water. It may be a thermoplastic resin or a thermosetting resin.

The thermoplastic resin, in order to have a heat resistance that allows the granular or fibrous state to be retained during drying at the time of precursor sheet production, is preferably a resin having a melting point or glass transition point of 100°C or more.

Specific examples include polyethylene, polypropylene, polyphenylene sulfide, polytetrafluoroethylene, tetrafluoroethylene-ethylene copolymers, polychlorotrifluoroethylene, polyamides, polyetherketone ether ketone ketone, polyetherketone, liquid-crystal polymers, polyimides, polyamide-imides, polyphenyl sulfones, polyether imides and polysulfones, polybutylene terephthalate, polyethylene naphthalate, ABS resins, polycycloolefins and polyether sulfones, as well as derivatives of these having a melting point of 100°C or more, and polycarbonates, polystyrenes and polyphenylene oxides, as well as derivatives of these having a glass transition point of 100°C or more. These may be used singly or two or more may be used in combination. The melting point or glass transition point has no particular upper limit, although from the standpoint of the productivity of the precursor sheet and the fuel cell separator, the melting point or glass transition point is preferably not more than 300°C.

The thermosetting resin may be suitably selected from among those which have hitherto been commonly used as binder resins in carbon separators and the like.

Specific examples include phenolic resins, epoxy resins, furan resins, unsaturated polyester resins, urea resins, melamine resins, diallyl phthalate resins, bismaleimide resins, polycarbodiimide resins, silicone resins, vinyl ester resins and benzoxazine resins. These may be used singly or two or more may be used in combination. Of these, epoxy resins and phenolic resins are preferred on account of their excellent heat resistance and mechanical strength.

These water-insoluble resins are available as commercial products.

The particle shape of the water-insoluble resin is not particularly limited and may be of any shape, such as a spherical, flaky, blocky, foil-like, plate-like, needle-like or amorphous shape. However, from the standpoint of the packing qualities of the particles, a spherical shape is preferred.

The mean particle size of the water-insoluble resin also is not particularly limited. However, to increase the packing properties of the particles and lower the electrical resistance of the resulting fuel cell separator, a particle size of from 1 to 150 µm is preferred.

In the precursor sheet of the invention, the content of the granular or fibrous water-insoluble resin is not particularly limited, provided that the precursor sheet can be re-slurrified. However, from the standpoint of the ease of re-slurrification, the content per 100 parts by weight of graphite particles is preferably from 10.0 to 70.0 parts by weight, and more preferably from 15.0 to 65.0 parts by weight.

### [3] Water-Soluble Resin

From the standpoint of uniformly dispersing the graphite particles and the granular or fibrous water-insoluble resin and rendering the dispersion into a sheet, the water-soluble resin preferably has dispersing properties, thickening properties and adhesive properties. In this invention, "water-soluble" signifies complete dissolution in 25°C water at a concentration of at least 1 wt%.

Specific examples of water-soluble resins include acrylic resins, polyvinyl resins, polyether resins, polyurethane resins, polyester resins, polyolefin resins, polyamide resins, polyimide resins, polyallylamine resins, phenolic resins, epoxy resins, phenoxy resins, urea resins, melamine resins, alkyd resins, formaldehyde resins, silicone resins, fluorocarbon resins and polysaccharides such as carboxymethylcellulose. These may be used singly or two or more may be used together. Of these, particularly from the standpoint of, with a small amount of addition, uniformly dispersing the graphite particles and the granular or fibrous water-insoluble resin and rendering the dispersion into a sheet, acrylic resins, polyvinyl resins, polyether resins and polysaccharides such as carboxymethylcellulose are preferred.

These water-soluble resins are available as commercial products.

In the precursor sheet of the invention, the content of the water-soluble resin is not particularly limited, provided that the precursor sheet can be re-slurrified. However, from the standpoint of the slurry dispersibility and the ease of re-slurrifying the precursor sheet, the content per 100 parts by weight of graphite particles is preferably from 0.1 to 30.0 parts by weight, and more preferably from 0.5 to 25.0 parts by weight. To further increase the strength of the precursor sheet, the content is even more preferably from 1.0 to 25.0 parts by weight.

### [4] Other Ingredients

In addition to the above ingredients, the precursor sheet of the invention may also include other ingredients that are commonly used in fuel cell separators.

Examples of such other ingredients include internal mold release agents such as stearate waxes, amide waxes, montanate waxes, carnauba wax and polyethylene wax, conductive additives such as carbon black, and reinforcing agents such as carbon fibers. In particular, from the standpoint of further enhancing the strength of the precursor sheet and the separator, it is preferable to include carbon fibers.

To make re-slurrification of the precursor sheet even better, the content of such other ingredients is preferably from 0.1 to 10 parts by weight, more preferably from 0.1 to 5 parts by weight, and even more preferably from 0.1 to 3 parts by weight, per 100 parts by weight of the carbon particles.

### [5] Method for Producing Precursor Sheet

The precursor sheet of the invention can be obtained by, for example, coating or casting, and thus forming into a sheet, a precursor sheet-forming slurry prepared by the dispersion in water of a composition containing the graphite particles, the granular or fibrous water-insoluble resin and the water-soluble resin, and subsequently removing water by drying. In this way, by wet kneading and thus uniformly dispersing the graphite and the granular or fibrous water-insoluble resin and forming the dispersion into a sheet, void formation due to incomplete resin packing at the time of hot compression molding can be suppressed, enabling a separator having a higher gas impermeability to be obtained.

An example of a method for fabricating precursor sheets by a coating process involves coating the slurry onto a plastic film such as PET film and drying the applied slurry, then peeling the dried slurry from the plastic film. The coating process is not particularly limited and may be suitably selected from among known methods such as spin coating, dipping, flow coating, inkjet coating, jet dispenser methods, spraying, bar coating, gravure coating, roll coating, transfer printing, brush coating, blade coating, air-knife coating, die coating and screen printing.

An example of a method for fabricating precursor sheets by casting involves casting the slurry into a box-like mold and drying the slurry, then removing the dried slurry from the mold. By using at this time a mold having a shape that anticipates the raised and recessed features of the separator, it is possible to fabricate precursor sheets having local differences in thickness, for which coating methods are poorly suited. The material making up the mold is not particularly limited, and may be suitably selected from known materials such as release-treated metal molds and plastic molds made of silicone, fluorocarbon resins or the like.

The slurry drying temperature is not particularly limited, so long as it is no higher than the melting point or glass transition point of the granular or fibrous water-insoluble resin, but is preferably not higher than 100°C, more preferably between room temperature and 100°C, and even more preferably between 50°C and 100°C.

The thickness of the precursor sheet is not particularly limited, so long as a fuel cell separator can be fabricated, but is preferably from 100 µm to 1 mm, and more preferably from 200 to 800 µm.

The precursor sheet of the invention is one obtained by using the water-soluble resin to render the graphite particles and the granular or fibrous water-insoluble resin into a sheet. The precursor sheet is not particularly limited as to its form, although it is preferable for at least some portion thereof to have a structure in which the graphite particles and the granular or fibrous water-insoluble resin are fixed by the water-soluble resin.

The precursor sheet of the invention has a shape which is retained by the dried water-soluble resin and a strength that enables it to be handled in the form of a sheet. At the same time, it is characterized in that the water-soluble resin re-dissolves on contact with water, enabling the sheet to be easily slurrified.

Moreover, because the slurry can be rendered into a sheet merely by drying and removing water, it is easy to form not only precursor sheets having a simple flat planar shape as in the prior art, but also ones having raised and recessed shapes of differing thicknesses.

### [5] Fuel Cell Separator

A fuel cell separator can be produced by heating and molding the precursor sheet of the invention.

The molding method is not particularly limited, although compression molding is preferred.

The temperature at the time of compression molding is not particularly limited so long as it is a temperature that exceeds the melting point or glass transition point of the granular or fibrous water-insoluble resin, although a mold temperature of between 150°C and 250°C is preferred.

The molding pressure is preferably from 1 to 100 MPa, and more preferably from 1 to 60 MPa.

The compression molding time is not particularly limited, and may be suitably set to between 3 seconds and about 1 hour.

Hot compression molding the precursor sheet of the invention causes the granular or fibrous water-insoluble resin to melt, giving a separator of the desired shape while filling voids and bonding the graphite particles. In the precursor sheet of the invention, because a granular or fibrous water-insoluble resin is used, the graphite particles are not coated beforehand with a water-insoluble resin as in the prior art and the formation of a resin layer on the separator surface during compression molding can be suppressed. As a result, the contact resistance and through-plane resistance are low, the electrical conductivity is excellent and, moreover, the resin content can be increased, enabling a separator of high gas impermeability to be obtained.

This provides in particular the following advantages: because the formation of a resin layer on the separator surface is suppressed, there is no need for a resin layer-removing step in order to enhance the conductivity; fine asperities are formed due to the increased percentage surface exposure of the graphite particles, improving the adhesion of gaskets and the like; and mold releasability at the time of hot compression molding improves.

A solid polymer fuel cell is generally composed of a stack of many unit cells, each of which is constructed of a solid polymer membrane disposed between a pair of electrodes that are in turn sandwiched between a pair of separators which form flow channels for the supply and removal of gases. The fuel cell separator of the invention may be used as some or all of the plurality of separators in the fuel cell.

### EXAMPLES

Examples of the invention and Comparative Examples are given below by way of illustration, although the invention is not limited by these Examples.

### [1] Fabrication of Precursor Sheets

### [Example 1-1]

A precursor sheet-forming slurry having a final solids concentration of 50 wt% was prepared by mixing together, expressed in terms of the solids ratios: 100 parts by weight of flaky graphite (particle size, 20 µm; the same applies below), 7.1 parts by weight of polyacrylic acid (molecular weight, 150,000; an aqueous solution having a solids concentration of 25 wt%; the same applies below) as the water-soluble resin, 35.7 parts by weight of granular phenolic resin (particle size, 25 µm; molecular weight, 10,000; the same applies below) as the granular water-insoluble resin, and water as the solvent.

This slurry was coated with a bar coater onto a release-treated PET film, dried within an 80°C forced-air dryer and, after drying, peeled from the PET film, giving a precursor sheet. The resulting precursor sheet had a thickness of 480 µm.

### [Example 1-2]

Aside from changing the granular water-insoluble resin from granular phenolic resin to powdered polypropylene (particle size, 15 µm), a precursor sheet having a thickness of 480 µm was obtained in the same way as in Example 1-1.

### [Example 1-3]

Aside from changing the amount of polyacrylic acid to 1.4 parts by weight and the amount of granular phenolic resin to 33.8 parts by weight, a precursor sheet having a thickness of 480 µm was obtained in the same way as in Example 1-1.

### [Example 1-4]

Aside from changing the amount of polyacrylic acid to 15.4 parts by weight and the amount of granular phenolic resin to 38.5 parts by weight, a precursor sheet having a thickness of 480 µm was obtained in the same way as in Example 1-1.

### [Example 1-5]

Aside from changing the amount of polyacrylic acid to 6.4 parts by weight and the amount of granular phenolic resin to 21.8 parts by weight, a precursor sheet having a thickness of 480 µm was obtained in the same way as in Example 1-1.

### [Example 1-6]

Aside from changing the amount of polyacrylic acid to 8.3 parts by weight and the amount of granular phenolic resin to 58.3 parts by weight, a precursor sheet having a thickness of 480 µm was obtained in the same way as in Example 1-1.

### [Example 1-7]

Aside from changing the amount of polyacrylic acid to 7.2 parts by weight and the amount of granular phenolic resin to 36.1 parts by weight and additionally including 1 part by weight of carbon fibers (diameter, 7 µm; fiber length, 6 mm), a precursor sheet having a thickness of 480 µm was obtained in the same way as in Example 1-1.

### [Example 1-8]

Aside from changing the amount of polyacrylic acid to 1.0 part by weight and the amount of granular phenolic resin to 33.7 parts by weight, a precursor sheet having a thickness of 480 µm was obtained in the same way as in Example 1-1.

### [Example 1-9]

Aside from changing the amount of polyacrylic acid to 19 parts by weight and the amount of granular phenolic resin to 39.7 parts by weight, a precursor sheet having a thickness of 480 µm was obtained in the same way as in Example 1-1.

### [Example 1-10]

Aside from changing the amount of polyacrylic acid to 6.3 parts by weight and the amount of granular phenolic resin to 18.8 parts by weight, a precursor sheet having a thickness of 480 µm was obtained in the same way as in Example 1-1.

### [Example 1-11]

Aside from changing the amount of polyacrylic acid to 8.6 parts by weight and the amount of granular phenolic resin to 63.8 parts by weight, a precursor sheet having a thickness of 480 µm was obtained in the same way as in Example 1-1.

### [Example 1-12]

Aside from mixing the precursor sheet obtained in Example 1-1 with water to again prepare a precursor sheet-forming slurry having a final solids concentration of 50 wt% and using this slurry, a precursor sheet having a thickness of 480 µm was obtained in the same way as in Example 1-1.

### [Comparative Example 1-1]

Aside from changing the amount of granular phenolic resin to 33.3 parts by weight and not including polyacrylic acid, a slurry was prepared in the same way as in Example 1-1. However, a precursor sheet could not be obtained.

### [Comparative Example 1-2]

A slurry having a final solids concentration of 50 wt% was prepared by mixing together, expressed in terms of the solids ratio: 100 parts by weight of flaky graphite, 7.1 parts by weight of polyacrylic acid, and water.

This slurry was coated with a bar coater onto a release-treated PET film, dried within an 80°C forced-air dryer and, after drying, peeled from the PET film to give a sheet. A granular phenolic resin was dissolved in acetone so as to form a 50 wt% solution, and the solution was coated onto and impregnated into the foregoing sheet, thereby giving a precursor sheet containing 35.7 parts by weight of non-granular phenolic resin originating from granular phenolic resin. The resulting precursor sheet had a thickness of 480 µm.

The above Examples and Comparative Examples are summarized in Table 1.

**[Table 1]**

| | | Example | | | | | | | | | | | | Comp. Example | |
|---|---|---|---|---|---|---|---|---|---|---|---|---|---|---|---|
| | | 1-1 | 1-2 | 1-3 | 1-4 | 1-5 | 1-6 | 1-7 | 1-8 | 1-9 | 1-10 | 1-11 | 1-12 | 1-1 | 1-2 |
| Graphite | Flaky natural graphite (average particle size d50 = 20 µm) | 100 | 100 | 100 | 100 | 100 | 100 | 100 | 100 | 100 | 100 | 100 | 100 | 100 | 100 |
| Water-soluble resin | Polyacrylic acid (molecular weight, 150,000) | 7.1 | 7.1 | 1.4 | 15.4 | 6.4 | 8.3 | 7.2 | 1 | 19 | 6.3 | 8.6 | 7.1 | 0 | 7.1 |
| Water-insoluble granular resin | Granular phenolic resin (particle size, 25 µm; molecular weight, 10,000) | 35.7 | - | 33.8 | 38.5 | 21.8 | 58.3 | 36.1 | 33.7 | 39.7 | 18.8 | 63.8 | 35.7 | 33.3 | - |
| | Powdery polypropylene (particle size, 15 µm) | - | 35.7 | - | - | - | - | - | - | - | - | - | - | - | - |
| Water-insoluble non-granular resin | Phenolic resin dissolved in acetone | - | - | - | - | - | - | - | - | - | - | - | - | - | 35.7 |
| Additive | Carbon fibers (diameter, 7 µm; fiber length, 6 mm) | - | - | - | - | - | - | 1.0 | - | - | - | - | - | - | - |

The dispersibility of the prepared slurries, strength of the resulting precursor sheets and re-slurrification of the precursor sheets in above Examples 1-1 to 1-12 and Comparative Examples 1-1 and 1-2 were evaluated by the following methods. The results are shown in Table 2.

### [Slurry Dispersibility]

The presence or absence of streaks and defects during coating of the PET film was visually assessed, the thickness was measured at six arbitrary points, and the dispersibility was evaluated according to the following criteria.

| | |
|---|---|
| ⊚: | No streaks or defects, and thickness variation of resulting precursor sheet is less than 3% |
| ○: | No streaks and defects, and thickness variation of resulting precursor sheet is at least 3% but less than 5% |
| Δ: | Surface unevenness due to streaks and defects is observable, and thickness variation of resulting precursor sheet is 5% or more |
| ×: | Pronounced streaks and defects present; precursor sheet cannot be obtained |

### [Strength of Precursor Sheet]

The tensile strength of the precursor sheet was determined by using an Autograph (Shimadzu Corporation) to measure the strength at break under the following conditions: chuck interval, 340 mm; sample width, 40 mm; rate of pull, 100 mm/min.

| | |
|---|---|
| ⊚: | 20 N/40 mm or more |
| ○: | At least 15 N/40 mm but less than 20 N/40 mm |
| Δ: | At least 10 N/40 mm but less than 15 N/40 mm |

### [Re-slurrification]

Thirty grams of a precursor sheet sample was re-slurrified by addition to 30 mL of water and stirring, the presence or absence of streaks and defects when the slurry was coated onto a PET film was visually assessed, and evaluation was carried out according to the same criteria as for the slurry dispersibility above.

| | |
|---|---|
| ⊚: | No streaks or defects, and thickness variation of resulting precursor sheet is less than 3% |
| ○: | No streaks and defects, and thickness variation of resulting precursor sheet is at least 3% but less than 5% |
| Δ: | Surface unevenness due to streaks and defects is observable, and thickness variation of resulting precursor sheet is 5% or more |
| ×: | Pronounced streaks and defects are present; precursor sheet cannot be obtained |

**[Table 2]**

| | Example | | | | | | | | | | | | Comp. Example | |
|---|---|---|---|---|---|---|---|---|---|---|---|---|---|---|
| | 1-1 | 1-2 | 1-3 | 1-4 | 1-5 | 1-6 | 1-7 | 1-8 | 1-9 | 1-10 | 1-11 | 1-12 | 1-1 | 1-2 |
| Slurry dispersibility | ⊚ | ⊚ | ○ | ⊚ | ⊚ | ○ | Δ | Δ | ⊚ | ⊚ | ○ | ⊚ | × | ⊚ |
| Precursor sheet strength | ○ | ○ | Δ | ⊚ | ○ | ○ | ⊚ | Δ | ⊚ | ○ | ○ | ○ | - | ⊚ |
| Re-slurrification | ⊚ | ⊚ | Δ | ⊚ | ⊚ | ○ | Δ | Δ | ⊚ | ⊚ | ○ | ⊚ | - | × |

As is apparent from Table 2, the slurries of Examples 1-1 to 1-12 have good dispersibilities, and re-slurrification of the resulting precursor sheets is possible. In addition, as shown in Example 1-12, it is apparent that when a precursor sheet is re-slurrified the dispersibility is good and also that re-slurrification of the resulting precursor sheet is possible as well.

On the other hand, it is apparent that the slurry obtained in Comparative Example 1-1, which does not include polyacrylic acid as the water-soluble resin, has a poor dispersibility, and so a precursor sheet cannot be obtained. It is also apparent that the precursor sheet obtained in Comparative Example 1-2, which does not contain granular phenolic resin (it contains phenolic resin dissolved in acetone), cannot be re-slurrified.

### [3] Fabrication of Fuel Cell Separators

### [Example 2-1]

The precursor sheet obtained in Example 1-1 was compression molded for 5 minutes at 180°C and 60 MPa using a flat-shaped mold, thereby giving a fuel cell separator. The separator molded in a flat shape had a thickness of 250 µm.

### [Examples 2-2]

Aside from changing the precursor sheet to that produced in Example 1-12, a fuel cell separator was obtained in the same way as in Example 2-1.

The gas impermeability and electrical conductivity of the resulting fuel cell separators were measured by the following methods and evaluated according to the criteria shown below. The results are shown in Table 3.

### [Gas Impermeability]

A flat-plate separator was molded, the hydrogen gas permeability coefficient (units: cm³·cm/(cm²·sec·cmHg)) was measured in accordance with JIS K7126-1: 2006 (Methods for Testing Gas Transmission Rate through Plastic Film and Sheeting, Section 1: Differential Pressure Method), and evaluated based on the criteria shown below. The type of test was gas chromatography, with measurement being carried out at 23°C and at 150.3 kPa for the high pressure-side test gas (hydrogen gas).

| | |
|---|---|
| ⊚: | Hydrogen gas permeability coefficient is less than 1.0×10⁻¹⁰ cm³·cm/(cm²·sec·cmHg) |
| ○: | Hydrogen gas permeability coefficient is at least 1.0×10⁻¹⁰ m³·cm/(cm²·sec·cmHg) but less than 1.0×10⁻⁹ cm³·cm/(cm²·sec·cmHg) |
| Δ: | Hydrogen gas permeability coefficient is at least 1.0×10⁻⁹ cm³·cm/(cm²·Sec·cmHg) but less than 1.0×10⁻⁸ cm³·cm/(cm²·sec·cmHg) |
| x: | Hydrogen gas permeability coefficient is 1.0×10⁻⁸ cm³·cm/(cm²·sec·cmHg) or more |

### [Electrical Conductivity]

A flat-plate separator was molded, one edge was sandwiched between 2 cm-sided gold-plated copper electrodes and 2.5 MPa of pressure was applied for 10 seconds, following which the pressure was lowered to 1.0 MPa and the interelectrode voltage when a constant current of 1 A/cm² was passed between the gold-plated copper electrodes was measured. The resulting interelectrode voltage was converted to a resistance and, treating this as the through-plane resistance of the separator (units: mΩ·cm²), the electrical conductivity was evaluated according to the following criteria.

| | |
|---|---|
| ⊚: | Through-plane resistance is less than 8 mΩ·cm² |
| ○: | Through-plane resistance is at least 8 mΩ·cm² but less than 10 mΩ·cm² |
| Δ: | Through-plane resistance is at least 10 mΩ·cm² but less than 15 mΩ·cm² |
| ×: | Through-plane resistance is 15 mΩ·cm² or more |

**[Table 3]**

| | Example | |
|---|---|---|
| | 2-1 | 2-2 |
| Gas impermeability | ⊚ | ⊚ |
| Conductivity | ⊚ | ⊚ |

It is apparent from Table 3 that the fuel cell separators obtained in Examples 2-1 and 2-2 have an excellent gas impermeability and an excellent electrical conductivity.

## Claims

1. A precursor sheet for a fuel cell separator, comprising graphite particles, a granular or fibrous water-insoluble resin and a water-soluble resin.

2. The fuel cell separator precursor sheet of claim 1, wherein the precursor sheet has a structure in which the graphite particles and the granular or fibrous water-insoluble resin are fixed by the water-soluble resin.

3. The fuel cell separator precursor sheet of claim 1, wherein the content of the water-soluble resin is from 0.1 to 30.0 parts by weight per 100 parts by weight of the graphite particles and the content of the granular or fibrous water-insoluble resin is from 10.0 to 70.0 parts by weight per 100 parts by weight of the graphite particles.

4. The fuel cell separator precursor sheet of claim 1, further comprising carbon fibers.

5. A fuel cell separator obtained by molding the fuel cell separator precursor sheet of any one of claims 1 to 4.
